# EUROPÄISCHE PATENTANMELDUNG

(11) **EP 0 813 055 A1**
(43) Veröffentlichungstag der Anmeldung: **17.12.1997**
(21) Anmeldenummer: 97109401.6
(22) Anmeldetag: 10.06.1997
(51) Int. Cl.: G01N 25/72, G01N 21/17

(54) **Verfahren und Vorrichtung zum photothermischen Prüfen von Werkstückoberflächen**

(30) Priorität: 10.06.1996 DE 19623121
(71) Anmelder: WAGNER INTERNATIONAL AG, 9450 Altstätten (CH)
(72) Erfinder: Adams, Horst, Dr., 88149 Nonnenhorn (DE)
(74) Vertreter: Liesegang, Roland, Dr.-Ing.

(57) **Zusammenfassung**

Ein Verfahren zum photothermischen Prüfen von Werkstückoberflächen, bei dem ein elektromagnetischer Anregungsstrahl von einer Meßeinheit auf einen Meßpunkt der Werkstückoberfläche gerichtet wird, um diese am Meßpunkt zu erwärmen, und die vom Meßpunkt ausgesandte Wärmestrahlung detektiert und ausgewertet wird, zeichnet sich dadurch aus, daß mehrere, auf der Werkstückoberfläche ausgewählte Meßpunkte von mindestens einem Teilstrahl des Anregungsstrahles beaufschlagt werden, und daß die von den Meßpunkten ausgehende Wärmestrahlungen aufgenommen und einer gemeinsamen Auswertung zugeführt werden.

## Beschreibung

Die Erfindung betrifft ein Verfahren zum photothermischen Prüfen von Werkstückoberflächen mit den Merkmalen des Oberbegriffs des Anspruchs 1.

Ein solches Verfahren ist z.B. aus der DE-A-38 20 862 bekannt. Für ein berührungsloses und zerstörungsfreies Prüfen von Werkstückoberflächen hat sich in den letzten Jahren eine photothermische Prüfung bewährt, bei welcher eine intensitätsmodulierte Anregungsstrahlung, insbesondere Laserstrahlung eine Erwärmung der Oberfläche am Meßpunkt erzeugt und bei der die von dem Meßpunkt ausgehende Wärmestrahlung detektiert und einer Auswertung zugeführt wird.

So ist aus der EP-A-0 609 193 bekannt, einen modulierten oder kontinuierlichen Laserstrahl, der mit einer mechnaischen Unterbrechung moduliert wird, auf eine Prüfoberfläche zu richten. Auf dieser Prüfoberfläche erzeugt der Laserstrahl eine periodische Erwärmung, welche mittels eines Infrarotdetektors erfaßt, gewandelt und zur Auswertung einem Rechner zugeführt wird.

Bei einer anderen bekannten Vorrichtung zur photothermischen Prüfung sind der Laser-Anregungsstrahl und der davon im Meßpunkt erzeugte Wärmestrahl kollinear ausgerichtet (DE 43 43 076 A1).

Die DE-A-38 20 862 offenbart ein Meßsystem, bei dem ein Laserpulsstrahl aufgeweitet und mittels einer Lochblende in mehrere Teilstrahlen zerlegt wird, welche gleichzeitig auf eine Prüfkörper gerichtet werden, wobei die von dem Prüfkörper abgegebene Wärmestrahlung von einer Wärmebildkamera erfaßt wird.

Aus der DE-A-30 37 983 ist eine Vorrichtung zum optischen Prüfen von Werkstückoberflächen bekannt, die ein Detektor-Dioden-Array aufweist, auf welches beleuchtete Punkte einer Probe abgebildet werden.

Der Erfindung liegt die Aufgabe zugrunde, ein Verfahren und eine Vorrichtung zu schaffen, mit denen eine Messung an mehreren ausgewälten Meßpunkten mit nur einer Anregungsquelle ermöglicht wird.

Diese Aufgabe ist durch ein Verfahren gemäß Anspruch 1 und eine Vorrichtung gemäß Anspruch 5 gelöst.

Ein Verfahren und eine Vorrichtung nach der Erfindung zeichnen sich dadurch aus, daß unter Verwendung nur einer einzigen Anregungsquelle, insbesondere eines Lasers, wie eines CO₂-Lasers mehrere ausgewählte, beispielsweise in einem Raster auf der Werkstückoberfläche angeordnete Meßpunkte erfaßt werden können. Dies kann je nach der jeweiligen Ausführungsform zeitlich nacheinander oder gleichzeitig geschehen. Im letzteren Falle wird der Anregungsstrahl in Teilstrahlen gleicher Intensität aufgeteilt, die gleichzeitig auf mehrere Meßpunkte gerichtet werden.

Die Vorrichtung nach der Erfindung weist in allgemeinster Form eine optische Einrichtung zum Beaufschlagen mehrerer, auf der Werkstückoberfläche ausgewählter Meßpunkte mit mindestens einem Teilstrahl des Anregungsstrahles auf. Die Detektorvorrichtung ist dabei als Mehrfach-Detektorvorrichtung zum Aufnehmen der von sämtlichen Meßpunkten ausgesandten Wärmestrahlung ausgebildet. Die optische Einrichtung und die Mehrfachdetektorvorrichtung ist bei einer bevorzugten Ausgestaltung der Erfindung in die Meßeinheit integriert.

Eine erste Ausgestaltung der optischen Einrichtung mit mehreren, im Strahlengang des Anregungsstrahles aufeinanderfolgend angeordneten teildurchlässigen Spiegeln ist in Anspruch 7 angegeben. Dabei kann die Mehrfach-Detektorvorrichtung mehrere Detektoren aufweisen, von denen jeder je einem teildurchlässigen Spiegel zugeordnet ist.

Alternativ kann die Mehrfach-Detektorvorrichtung auch ein wärmeempfindliches Detektor-Array in Linear- oder in Matrix-Anordnung sein.

Eine Ausgestaltung des Detektor-Arrays als Matrix ist dann bevorzugt, wenn gemäß einer weiteren vorteilhaften Ausführung der Erfindung die optische Einrichtung von einem um zwei Achsen schwenkbaren Spiegel gebildet ist.

Das Verfahren und die Vorrichtung werden mit besonderem Vorteil zur Schichtdickenmessung einer Werkstückbeschichtung, insbesondere aus nicht eingebranntem Pulver, eingesetzt.

Die Erfindung ist im folgenden anhand schematischer Zeichnungen an mehreren Ausführungsbeispielen mit weiteren Einzelheiten näher erläutert. Es zeigen:
- Fig. 1: eine perspektivische Ansicht einer ersten Ausführung der Erfindung;
- Fig. 2: eine schematische Draufsicht auf die Ausführung der Erfindung nach Fig. 1, wobei in Fig. 1 nicht gezeigte Baugruppen zusätzlich schematisch dargestellt sind;
- Fig. 3: eine perspektivische Ansicht einer zweiten Ausführung der Erfindung;
- Fig. 4: eine Draufsicht auf die Ausführung nach Fig. 3, wobei in Fig. 3 nicht gezeigte Baugruppen zusätzlich schematisch dargestellt sind;
- Fig. 5: eine perspektivische Ansicht einer dritten Ausführung der Erfindung.

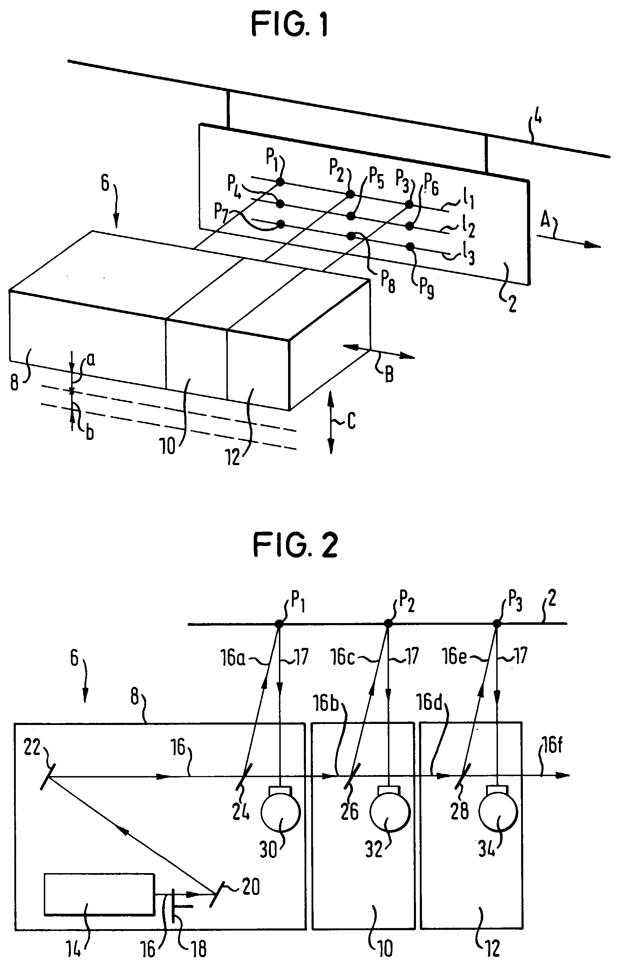

In den Figuren 1 und 2 ist eine erste Ausführung der Erfindung beschrieben.

Mit der Bezugszahl 2 ist ein Werkstück bezeichnet, das längs einer Förderbahn 4 kontinuierlich in Richtung des Pfeiles A bewegt wird. Das Werkstück ist zumindest auf der dem Betrachter zugewandten Werkstückoberfläche mit einem noch nicht eingebrannten Farbpulver beschichtet.

Die Bezugszahl 6 bezeichnet eine Meßeinheit, die aus einer Grund- oder Haupteinheit 8 und zwei Untereinheiten 10, 12 zusammengebaut ist und insgesamt in Richtung des Doppelpfeiles B in Richtung parallel und im Gleichtakt zum Werkstück sowie entgegengesetzt dazu beweglich ist. In der Haupteinheit 8 ist ein Laser 14 angeordnet, aus dem ein Anregungsstrahl 16 austritt. Dieser Anregungsstrahl wird mittels einer üblichen Moduliereinrichtung, wie einem Chopper 18, moduliert, d.h. periodisch unterbrochen und von Spiegeln 20,22 umgelenkt. Im Strahlengang des umgelenkten Strahls 16 ist ein teildurchlässiger Spiegel 24 angeordnet. Ferner ist in der Haupteinheit 8 ein wärmeempfindlicher Detektor, kurz: IR-(Infra-Rot)Detektor 30, angeordnet.

Ein Teilstrahl 16a des Anregungsstrahles wird vom teildurchlässigen Spiegel 24 reflektiert, während ein zweiter Teilstrahl 16b in Fortsetzung des Anregungsstrahles 16 den teildurchlässigen Spiegel 24 passiert. Dieser Teilstrahl 16b trifft auf einen weiteren teildurchlässigen Spiegel 26, wobei er wiederum in einen reflektierten Teilstrahl 16c und einen durchgelassenen Teilstrahl 16d aufgeteilt wird. Auch dieser durchgelassene Teilstrahl 16d wird in einen reflektierten Teilstrahl 16e und ggf. in einen durchgelassenen Teilstrahl 16f aufgeteilt, sofern weitere, gleich wie die Untereinheiten 10, 12 aufgebaute Untereinheiten vorgesehen sind. Anderenfalls wird der Teilstrahl 16d vollständig vom teildurchlässigen Spiegel 28 reflektiert.

Das Teilungsverhältnis der Teilstrahlen ist für den Fall, daß der Teilstrahl 16d vollständig reflektiert wird, 1:3 am teildurchlässigen Spiegel 24, 1:1 am teildurchlässigen Spiegel 26 und 1:0 am teildurchlässigen Spiegel 28. Allgemein ist das Teilungsverhältnis so zu wählen, daß die Teilstrahlen 16a, 16c und 16e gleiche Strahlungsintensität haben. Entsprechend wäre das Teilungsverhältnis bei einer anderen Anzahl von Untereinheiten (mehr als zwei) zu staffeln.

Die Teilstrahlen 16a, 16c und 16e treffen auf ausgewählte, in einer Linie l₁ angeordnete Meßpunkte P₁, P₂, P₃ der Werkstückoberfläche auf. An der Haupteinheit 8 ist ein IR-Detektor 30 zum Empfang eines normal zum Werkstück 2 von dem Meßpunkt P₁ abgestrahlten Wärmestrahles 17 angeordnet.

Auch an den Untereinheiten 10, 12 sind jeweils IR-Detektoren 32, 34 zum Empfang jeweils von Wärmestrahlen 17 angeordnet, die von den Meßpunkten P₂, P₃ normal abgestrahlt werden.

Im Betrieb wird in einem ersten Schritt die Meßeinheit 6 mit der Haupteinheit 8 und den Untereinheiten 10,12 im Gleichtakt mit dem Werkstück parallel dazu bewegt, so daß keine Relativbewegung zwischen Werkstück 2 und Meßeinheit 6 herrscht. Von dem einen Anregungsstrahl 16 erzeugte, reflektierte Anregungs-Teilstrahlen 16a, 16c, 16e werden gleichzeitig auf die in einer nicht notwendigerweise geraden Linie l₁ liegenden, ausgewählten Meßpunkte P₁, P₂, P₃ gestrahlt, wodurch eine Erwärmung an diesen Meßpunkten erzeugt wird. Die durch die Erwärmung erzeugte Wärmestrahlung wird mit größter Intensität normal von den Meßpunkten P₁, P₂, P₃ zur Meßeinheit 6 zurückgestrahlt, wo die Wärmestrahlung von den jeweiligen Detektoren 30, 32, 34 aufgenommen und einer an sich bekannten Auswertung, wie einer Wandlung und anschließender Verarbeitung zu Schichtdickensignalen zugeführt wird. Eine solche Wandlung und Auswertung ist an sich bekannt.

In einem zweiten Schritt wird die Meßeinheit 6 bei fortgesetzter, gleich schneller Bewegung wie das Werkstück 2 um eine vertikale Strecke a verlagert. Diese vertikale Strecke a entspricht dem Abstand einer zweiten Linie l₂ von der ersten Linie l₁, wobei auf der zweiten Linie Meßpunkte P₄, P₅ und P₆ angeordnet sind. Hier werden die oben beschriebenen Bestrahl- und Detektionsvorgänge wiederholt. Schließlich wird in einem dritten Schritt die Meßeinheit 6 noch einmal um einen Abstand b, der gleich groß wie der Abstand a sein kann, verlagert, worauf die beschriebenen Vorgänge an längs der Linie l₃ angeordneten Meßpunkten P₇, P₈ und P₉ erneut wiederholt werden.

Auf die beschriebene Weise ist in einem Arbeitsgang die Messung an mehreren, bei dem beschriebenen Beispiel in einem Raster angeordneten Meßpunkten P₁ bis P₉ unter Verwendung nur eines einzigen Lasers 14 ermöglicht.

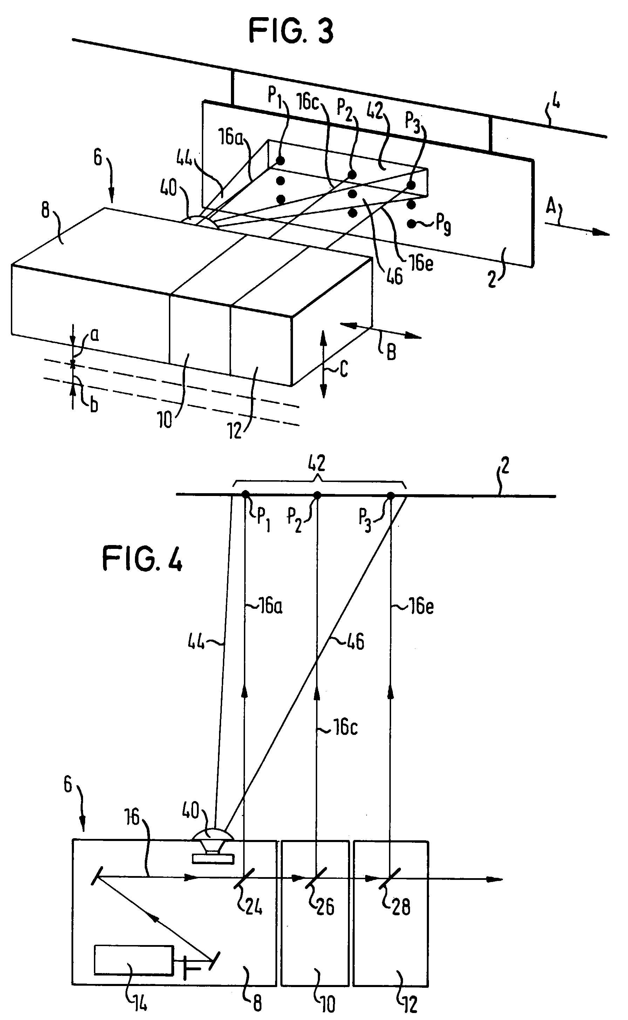

Die Figuren 3 und 4 zeigen eine abgewandelte Ausführung, wobei gleiche oder funktionsgleiche Teile mit gleichen Bezugszeichen wie in den Figuren 1 und 2 bezeichnet und nicht nochmals beschrieben sind.

Unterschiedlich bei der Ausführung nach Fig. 3 und 4 ist lediglich die Detektoreinrichtung. Anstelle der drei gesonderten Detektoren 30, 32, 34 ist nämlich ein IR-empfindliches Detektor-Linear-Array an der Haupteinheit 8 angeordnet, das ein gleichzeitiges Erfassen der jeweils von den Meßpunkten P₁-P₃, P₄-P₆ und P₇-P₉ abgestrahlten Wärmestrahlen in ähnlicher Weise ermöglicht, wie dies ein Array von optischen Sensoren in Video-Kameras zum Erfassen eines Videobildes ermöglicht. In den Figuren 3 und 4 ist dieses Detektor-Array mit Bezugszahl 40 bezeichnet.

In gleicher Weise wie bei der Ausführung nach den Figuren 1 und 2 ist auch hier die Meßeinheit 6 in vertikaler Richtung schrittweise beweglich, um in weiteren Linien l₂ und l₃ angeordnete Meßpunkte erfassen zu können.

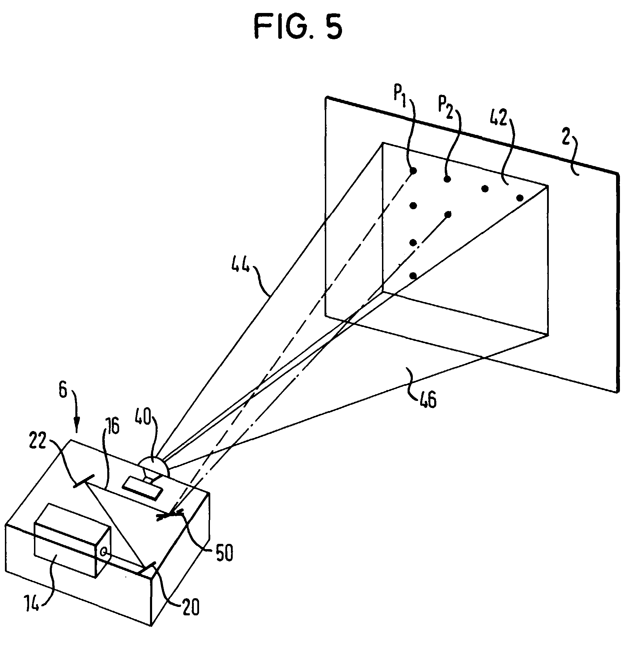

Anders ist dies bei der Ausführung nach Fig. 5. Dort bleibt die hier wiederum mit 6 bezeichnete Meßeinheit relativ zum Werkstück während des Meßvorganges unbewegt, wird also bei bewegtem Werkstück mit diesem mit gleicher Geschwindigkeit mitbewegt. Laser 14 und Umlenkungsspiegel 20, 22 sind gleich wie bei der Ausführung nach den Figuren 3 und 4 aufgebaut und angeordnet. Das Detektor-Array ist in diesem Fall als zweidimensionale Matrix ausgebildet. Die Anordnung mit mehreren teildurchlässigen Spiegeln ist jedoch hier durch einen einzigen, in zwei Achsen schwenk- und kippbaren Spiegel 50 ersetzt. Dieser Spiegel, der nicht teildurchlässig ist, also stets den vollen Anregungsstrahl auf die Werkstückoberfläche reflektiert, ist im erforderlichen Zeittakt (für einen Meßpunkt ist eine Bestrahlung zwischen 1 und 5 Sekunden Dauer erforderlich) gesteuert schwenk- und kippbar, z.B. über ein nicht gezeigtes Scan-System, welches die Schwenk- und Kippbewegungen des Spiegels abhängig von der Werkstückgeometrie steuert.

Die Auswertung der Infrarot-Bildsensor-Signale kann mit einem Standard-Bilderfassungssystem und einem Bildauswertesystem erfolgen.

Bei allen drei oben beschriebenen Ausführungsbeispielen kann zusätzlich eine gesteuerte Bewegung der Meßeinheit 6 quer zur Werkstückoberfläche vorgesehen sein, um auch an Auswölbungen oder Vertiefungen der Werkstückoberfläche messen zu können, falls erforderlich.

Der Laser ist bei einer vorteilhaften Ausführung der Erfindung ein wassergekühlter CO₂-Laser. Das Werkstück 2 wird in der Praxis mit einer Geschwindigkeit in Richtung des Pfeils A von 0 - 10 m/min bewegt. Bei einem Meßbereich (bezogen auf die eingebrannte Schichtdicke) von 50 - 150 µm beträgt die Meßgenauigkeit ca ±3% der Schichtdicke. Die konkrete Größe des Meßflecks an jedem Meßpunkt ist in der Größenordnung von 100 mm² bei einem Arbeitsabstand zwischen Meßeinheit 6 und Werkstück 2 von 500 - 800 mm. Der Detektor kann in bekannter Weise aus Indium Antimonid bestehen und mit flüssigem Stickstoff gekühlt werden, der in der Praxis alle 12 Stunden verbraucht wird, so daß in diesem Zeitraum nachgefüllt werden muß.

## Patentansprüche

1. Verfahren zum photothermischen Prüfen von Werkstückoberflächen, bei dem ein elektromagnetischer Anregungsstrahl von einer Meßeinheit auf einen Meßpunkt der Werkstückoberfläche gerichtet wird, um diese am Meßpunkt zu erwärmen, und die vom Meßpunkt ausgesandte Wärmestrahlung detektiert und ausgewertet wird, wobei mehrere, auf der Werkstückoberfläche ausgewählte Meßpunkte (P₁-P₉) von mindestens einem Teilstrahl (16a,16b,16e) des Anregungsstrahles (16) beaufschlagt werden, und die von den Meßpunkten ausgehenden Wärmestrahlungen aufgenommen und einer gemeinsamen Auswertung zugeführt werden, wobei der Anregungsstrahl (16) in Teilstrahlen (16a, 16c, 16e) aufgeteilt wird, die im wesentlichen gleichzeitig auf mehrere Meßpunkte (P₁, P₂, P₃) gerichtet werden, dadurch **gekennzeichnet**, daß die Meßeinheit (6) verschoben wird, um die Teilstrahlen auf weitere Meßpunkte (P4, P5, P6; P7, P8, P9) zu richten, und daß die von den Meßpunkten (P1-P3, P4-P5, P6-P9) ausgehenden Wärmestrahlungen von zugeordneten Detektorelementen(30,32,34) erfaßt werden.

2. Verfahren nach Anspruch 1, dadurch **gekennzeichnet**, daß die Werkstückoberfläche in einer Richtung bewegt wird, und die Meßeinheit (6) nach Bedarf im Gleichtakt mit oder relativ zu der Werkstückoberfläche (2) bewegt wird.

3. Verfahren nach Anspruch 1 oder 2, dadurch **gekennzeichnet**, daß der Anregungsstrahl (16) nacheinander auf die ausgewählten Meßpunkte (P₁-P₉) der Werkstückoberfläche gerichtet wird.

4. Verfahren nach Anspruch 1, 2 oder 3, dadurch **gekennzeichnet**, daß die Teilstrahlen (16a,16c,16e) von der Meßeinheit (6) gleichzeitig auf in einer Linie (l₁) angeordnete Meßpunkte (P₁,P₂,P₃) gerichtet werden und daß nach wiederholtem Verschieben der Meßeinheit (6) in einer zur Werkstückoberfläche, aber nicht zu der Linie parallelen Richtung die Teilstrahlen erneut auf in weiteren Linien (l₂,l₃) angeordnete Meßpunkte (P₄-P₆, P₇-P₉) gerichtet werden.

5. Vorrichtung zum photothermischen Prüfen von Werkstückoberflächen mit einer Meßeinheit (6), welche einen Anregungsstrahlerzeuger (14) für elektromagnetische Strahlung (16), insbesondere einen Laser aufweist, von dem aus Anregungsstrahlen auf ausgewählte Meßpunkte eines Werkstückes gerichtet werden können, sowie mit einer Detektorvorrichtung, welche die an den Meßpunkten erzeugte Erwärmung detektiert und einer Auswertung zuführt, mit einer optischen Einrichtung (24,26,28;50) zum Beaufschlagen mehrerer, auf der Werkstückoberfläche ausgewählter Meßpunkte (P₁-P₉) mit mindestens einem Teilstrahl (16a,16c,-16e) des Anregungsstrahles (16), dadurch **gekennzeichnet**, daß die Detektorvorrichtung als Mehrfach-Detektorvorrichtung (30,32,34;50) zum Aufnehmen der von den jeweilig beaufschlagten (P1-P3, P4-P6, P7-P9) Meßpunkten ausgesandten Wärmestrahlungen ausgebildet ist, und daß die Meßeinheit (6) relativ zur Werkstückoberfläche beweglich ist.

6. Vorrichtung nach Anspruch 5, dadurch **gekennzeichnet**, daß die optische Einrichtung (24,26,28;50) und die Mehrfach-Detektorvorrichtung (30,32,34;40) in die Meßeinheit (6) integriert sind.

7. Vorrichtung nach Anspruch 5 oder 6, dadurch **gekennzeichnet**, daß die optische Einrichtung mehrere im Strahlengang des Anregungsstrahles hintereinander angeordnete, in ihrer Anzahl der Anzahl der Meßpunkte in jeweils einer von mehreren parallelen Linien (l₁,l₂,l₃) entsprechende, teildurchlässige Spiegel (24,26,28) umfaßt, die einen Teilstrahl (16a,16c,16e) des Anregungsstrahles (16) zum zugehörigen Meßpunkt (P₁-P₉) reflektieren und den verbleibenden Teilstrahl (16b,16d,16f) zum jeweils nachgeordneten teildurchlässigen Spiegel durchlassen.

8. Vorrichtung nach Anspruch 7, dadurch **gekennzeichnet**, daß das Verhältnis zwischen reflektierten und durchgelassenen Strahlanteilen so bemessen ist, daß der auf den entsprechenden Meßpunkt reflektierte Strahlanteil für sämtliche teildurchlässige Spiegel gleich groß ist.

9. Vorrichtung nach Anspruch 7 oder 8, dadurch **gekennzeichnet**, daß die Mehrfach-Detektorvorrichtung mehrere Detektoren (30,32,34) aufweist, von denen jeder je einem teildurchlässigen Spiegel (24,26,28) zugeordnet ist.

10. Vorrichtung nach einem der Ansprüche 5 bis 9, dadurch **gekennzeichnet**, daß die Mehrfach-Detektorvorrichtung ein wärmeempfindliches Detektor-Linear- oder Matrix-Array (40) ist.

11. Vorrichtung nach einem der Ansprüche 5 bis 10, dadurch **gekennzeichnet**, daß die Meßeinheit (6) relativ zur und im Gleichtakt mit der Werkstückoberfläche (2) beweglich ist, welche sich in einer bestimmten Richtung bewegt.

12. Vorrichtung nach einem der Ansprüche 6 bis 11, dadurch **gekennzeichnet**, daß das Werkstück (2) und die Meßeinheit (6) während der Messung gemeinsam mit gleicher Geschwindigkeit parallel zueinander kontinuierlich bewegbar sind.

13. Vorrichtung nach einem der Ansprüche 6 bis 12, dadurch **gekennzeichnet**, daß die Meßeinheit (6) in einer Richtung (C) parallel zur Werkstückoberfläche und orthogonal zu der Linienanordnung (l₁,l₂,l₃) der Meßpunkte schrittweise relativ zum Werkstück beweglich ist.

14. Vorrichtung nach einem der Ansprüche 5 bis 12, dadurch **gekennzeichnet**, daß die Meßpunkte (P₁-P₉) in einem Raster auf der Werkstückoberfläche angeordnet sind.

15. Vorrichtung nach einem der Ansprüche 5 bis 14 oder 12, dadurch **gekennzeichnet**, daß die optische Einrichtung von einem um zwei Achsen schwenk- und kippbaren Spiegel (50) gebildet ist und daß die Meßeinheit (6) während der Messung relativ zum Werkstück (2) unverschieblich ist.

16. Vorrichtung nach Anspruch 15, dadurch **gekennzeichnet**, daß die Schwenk- und Kippbewegungen des Spiegels (50) steuerbar sind, insbesondere automatisch und in Anpassung an die Werkstückgeometrie.

17. Vorrichtung nach einem der Ansprüche 5 bis 16, dadurch **gekennzeichnet**, daß die Auswer tung über Standard-Bilderfassungs- und Bildauswerte-Systeme erfolgt.

18. Anwendung eines Verfahrens nach einem der Ansprüche 1 bis 4 zur Schichtdickenmessung einer Werkstückbeschichtung, insbesondere aus nicht eingebranntem Pulver.

19. Anwendung einer Vorrichtung nach einem der Ansprüche 5 bis 17 zur Schichtdickenmessung einer Werkstückbeschichtung, insbesondere aus nicht eingebranntem Pulver.
